(19) **Europäisches Patentamt**

**European Patent Office**

**Office européen des brevets**

(11) Veröffentlichungsnummer: **0 316 671 B1**

(12) **EUROPÄISCHE PATENTSCHRIFT**

(45) Veröffentlichungstag der Patentschrift: **05.05.93**

(21) Anmeldenummer: **88118346.1**

(22) Anmeldetag: **04.11.88**

(51) Int. Cl.⁵: **C08F 297/04**

(54) **Verfahren zur diskontinuierlichen Herstellung von unsymmetrisch aufgebauten, sternförmig verzweigten Blockcopolymerisaten und ihre Verwendung.**

(30) Priorität: **14.11.87 DE 3738748**

(43) Veröffentlichungstag der Anmeldung:
**24.05.89 Patentblatt 89/21**

(45) Bekanntmachung des Hinweises auf die Patenterteilung:
**05.05.93 Patentblatt 93/18**

(84) Benannte Vertragsstaaten:
**BE DE FR GB IT NL**

(56) Entgegenhaltungen:
**EP-A- 0 153 727**
**EP-A- 0 255 001**
**US-A- 4 390 663**

(73) Patentinhaber: **BASF Aktiengesellschaft**
**Carl-Bosch-Strasse 38**
**W-6700 Ludwigshafen(DE)**

(72) Erfinder: **Walter, Hans-Michael, Dr.**
**Im Haagweg 6**
**W-6701 Ruppertsberg(DE)**
Erfinder: **Pohrt, Juergen**
**Carolus-Vocke-Ring 72**
**W-6800 Mannheim 51(DE)**
Erfinder: **Gausepohl, Hermann, Dr.**
**Neuweg 10**
**W-6704 Mutterstadt(DE)**
Erfinder: **Bronstert, Klaus, Dr.**
**Gartenstrasse 26**
**W-6719 Carlsberg(DE)**
Erfinder: **Benedix, Franz**
**Autharistrasse 44**
**W-6701 Otterstadt(DE)**

**Beschreibung**

Die Erfindung betrifft ein Verfahren zur diskontinuierlichen Herstellung von unsymmetrisch aufgebauten, sternförmig verzweigten Blockcopolymerisaten, die, bezogen auf das verzweigte Blockcopolymerisat, 50 bis 95 Gew.% Styrol und 50 bis 5 Gew.% eines konjugierten Diens mit 4 bis 5 C − Atomen einpolymerisiert enthalten, durch

a) sequentielle anionische Polymerisation ggf. unterschiedlich bemessener Styrol − und Dien − Mengen in Gegenwart eines Lösungsmittels und unter Verwendung einer lithiumorganischen Verbindung als Initiator, von der ein kleinerer Anteil zu Beginn der sequentiellen Polymerisation und ein größerer Anteil danach zugegeben wird und wobei die sequentiell zugegeben Monomermengen jeweils vollständig auspolymerisiert werden, und

b) Kopplung der durch sequentielle anionische Polymerisation gebildeten Mischung von lebenden Blockcopolymeranionen bimodaler Molmassenverteilung mit an sich bekannten polyfunktionellen Kopp − lungsmitteln unter an sich bekannten Bedingungen und ggf. anschließender Behandlung mit Protonen − donatoren, Entfernen des Lösungsmittels und Gewinnung des Wertproduktes.

Zum Stand der Technik werden genannt:

(1) DE − AS 19 59 922

(2) DE − PS 2 550 227

(3) EP − A1 0 058 952 und

(4) EP − A1 0 153 727

Transparente, schlagzähe sternförmig verzweigte Styrol − Dien − Blockcopolymerisatewerden in (1) bis (4) mit unterschiedlichen Blockaufbauten beschrieben. In keinem Fall wird eine befriedigende Kombination aus hoher Zähigkeit, guter Transparenz, leichter Verarbeitbarkeit und ausgeprägter Verarbeitungsstabilität erreicht.

Es bestand daher die Aufgabe, die genannten Nachteile zu beheben. Dies gelingt durch diskontinuierli − che anionische Polymerisation, wobei der das wasserfreie (austitrierte) Lösungsmittel als Vorlage enthal − tende Polymerisationreaktor mit insgesamt zwei Initiatorgaben $I_1$ und $I_2$ und den Monomeren Styrol und Dien ($S_n$ und $B_n$) beschickt wird und die Monomeren in bestimmten Mengen und einer bestimmten Reihenfolge polymerisiert werden, wobei anschließend gekoppelt wird. Insbesondere wird der Reaktor mit vier Monomerportionen beschickt, wobei mindestens eine Monomerenportion ein Gemisch aus Styrol und Dien darstellt.

Die Erfindung betrifft ein Verfahren zur diskontinuierlichen Herstellung von unsymmetrisch aufgebauten, sternförmig verzweigten Blockcopolymerisaten, die, bezogen auf das verzweigte Blockcopolymerisat, 50 bis 95 Gew.% Styrol und 50 bis 5 Gew.% eines konjugierten Diens mit 4 bis 5 C − Atomen einpolymerisiert enthalten, durch

a) sequentielle anionische Polymerisation ggf. unterschiedlich bemessener Styrol − und Dien − Mengen in Gegenwart eines Lösungsmittels und unter Verwendung einer lithiumorganischen Verbindung als Initiator, von der ein kleinerer Anteil zu Beginn der sequentiellen Polymerisation und ein größerer Anteil danach zugegeben wird und wobei die sequentiell zugegeben Monomermengen jeweils vollständig auspolymerisiert werden, und

b) Kopplung der durch sequentielle anionische Polymerisation gebildeten Mischung von lebenden Blockcopolymeranionen bimodaler Molmassenverteilung mit an sich bekannten polyfunktionellen Kopp − lungsmitteln unter an sich bekannten Bedingungen und ggf. anschließender Behandlung mit Protonen − donatoren, Entfernen des Lösungsmittels und Gewinnung des Wertproduktes, dadurch gekennzeichnet, daß der wasserfreies (austitriertes) Lösungsmittel als Vorlage enthaltende Polymerisationsreaktor mit den Initiatormengen $I_n$ und den Monomeren Styrol und Dien in den Mengen $S_n$ und $B_n$ beschickt wird und letztere in der nachfolgend genannten Folge polymerisiert werden:

| | | Initiator | Menge [mmol] | Art des Monomeren | Menge [g] |
|---|---|---|---|---|---|
| | 1. Schritt | $I_1$ | $0,25 - 0,65$ | $--$ | $--$ |
| | 2. Schritt | $--$ | $--$ | $S_1$ | $20 - 35$ |
| | 3. Schritt | $--$ | $--$ | $B_1$ | $2 - 20$ |
| | 4. Schritt | $I_2$ | $0,90 - 3,50$ | $--$ | $--$ |
| | 5. Schritt | $--$ | $--$ | $S_2$ | $20 - 32$ |
| | 6. Schritt | $--$ | $--$ | Gemisch $B_2 + S_3$ | $3 - 30/10 - 28$ |

wobei stehen für

[mmol] millimol Initiator, bezogen auf 100 g der gesamten Menge der Monomeren Styrol und Dien.

[g] gramm Monomerensorte, bezogen auf 100 g der gesamten Menge Styrol und Dien.

und die Bereiche der Monomeren in [g] die aus den Initiator − und Monomermengen berechneten relativen Blocklängen der lebenden Anionen, vor der Kopplung, bedeuten.

Weitere Verfahrensvarianten mit anderem Block − Aufbau sind in dem Patentanspruch 3 (Variante B) und dem Patentanspruch 5 (Variante C) beschrieben.

Die nach dem erfindungsgemäßen Verfahren hergestellten Blockcopolymerisate aus Styrol und konju − giertem Dien weisen gegenüber solchen vom Stand der Technik auf einem hohen Transparenzniveau verbesserte Zähigkeit und verbesserte Verarbeitbarkeit bei mindestens gleich guter Verarbeitungsstabilität auf. Diese Vorteile ergeben sich aus einem spezifischen Blockaufbau, d.h. aus einer ganz bestimmten Reihenfolge der Reaktorbeschickung mit Initiator und Monomeren.

Nachstehend wird das erfindungsgemäße Verfahren näher erläutert.

Die Herstellung von unsymmetrisch aufgebauten, sternförmig verzweigten Blockcopolyerisaten ist aus (1) bis (4) hinreichend bekannt [vgl. insbesondere die Schrift (3)].

Die nach dem erfindungsgemäßen Verfahren hergestellte Blockcopolymerisate enthalten 50 bis 95 Gew.%, insbesondere 60 bis 85 Gew.% Styrol und 5 bis 50 Gew.%, insbesondere 15 bis 40 Gew.% mindestens eines konjugierten Diens mit 4 oder 5 C − Atomen, wie Butadien oder Isopren, wobei Butadien bevorzugt wird. Die Viskositätszahlen der nach dem erfindungsgemäßen Verfahren hergestellten gekoppel − ten Blockcopolymerisate liegen im Bereich von 65 bis 110[ml/g], vorzugsweise 70 bis 95[ml/g], gemessen in Toluol 0,5 %ig bei 23°C. Hierbei ist noch darauf hinzuweisen, daß die Kopplung in der Regel nicht vollständig verläuft und somit ein Gemisch aus ungekoppelten linearen 5 − und 3 − Blockcopolymerisaten und gekoppeltem Produkt vorliegt.

Die sequentielle anionische Polymerisation ist an sich bekannt [vgl. (1) bis (4)]. Sie wird unter Verwendung von bevorzugt Monolithiumkohlenwasserstoffen R − Li durchgeführt, wobei R einen aliphati − schen cycloaliphatischen oder aromatischen Kohlenwasserstoffrest mit 1 bis 12 C − Atomen darstellen kann. Bevorzugt werden n − Butyllithium und insbesondere sec. − Butyllithium.

Vor Beginn der sequentiellen Polymerisation wird in das vorgelegte und austitrierte Lösungsmittel, das zunächst in den Reaktor eingebracht wird, eine kleine Menge des Initiators zugegeben, diese liegt im Bereich von 0,25 bis 0,65 millimol pro 100 g der Gesamtmonomeren (Summe Styrol + Dien). Nach zwei Zugaben von Monomeren, von denen eine Zugabe gegebenenfalls eine Monomermischung darstellt, wird eine größere Menge Initiator zugefügt, die im Bereich von 0,90 − 3,5 mmol pro 100 g der Gesamtmonomeren liegt. Daran schließen sich zwei weitere Zugaben von Monomeren an, von denen die letzte Zugabe ein Gemisch aus Styrol und Dien darstellt. Wichtig ist, daß nach jeder Monomerzugabe, auch nach der Zugabe der Monomermischung, jeweils vollständig polymerisiert wird.

Als Lösungsmittel kommen ganz allgemein aliphatische, cycloaliphatische oder aromatische Kohlen − wasserstoffe oder deren Gemische zur Anwendung die unter Reaktionsbedingungen flüssig sind und in der Regel 4 bis 12 C − Atome aufweisen. Es seien genannt Isobutan, n − Pentan, Isooctan, Cyclohexan, Cycloheptan, Benzol, Toluol oder Xylole. Bevorzugt werden Cyclohexan und Toluol.

Die Mitverwendung von polaren Mitteln, wie Ethern, insbesondere THF, in kleinen Mengen ist möglich, insbesondere wenn auf den Gehalt der 1,2 − Butadieneinheiten Einfluß genommen werden soll.

Die anionische Polymerisation nach dem erfindungsgemäßen Verfahren wird im üblichen Temperatur − bereich von 30 bis 120°C, vorzugsweise von 40 bis 100°C unter trockenem Inertgas, z.B. $N_2$, wasserfrei durchgeführt. Zuvor müssen das Lösungsmittel, die Monomeren, die später zu verwendenden Kopplungs − mittel wasserfrei gemacht werden. Zur Entfernung von letzten Spuren Wasser wird z.B. das Lösungsmittel mit dem Initiator n − bzw. sec. − Butyllithium titriert. Nach Einbringung der letzten von vier Monomerpartien, einer Mischung aus Styrol und Dien, und der anschließenden Polymerisation, liegt eine Mischung lebender Anionen von linearen 5 − Block − und 3 − Blockcopolymerisaten unterschiedlichen Blockaufbaus und unter −

schiedlicher Blocklänge vor. Dabei werden im Sinne des erfindungsgemäßen Verfahrens, die bei der Polymerisation von Mischungen aus Styrol und Dien erhaltenen Blocksegmente mit sogenanntem verschmiertem Übergang als zwei Blöcke gerechnet.

Die genannte Mischung von lebenden Blockpolymeranionen weist Viskositätszahlen im Bereich von 30 bis 65 ml/g, vorzugsweise im Bereich von 40 bis 55 ml/g, gemessen 0,5 %ig in Toluol bei 23˚C, auf und wird üblicherweise bei Temperaturen von 60 bis 100˚C, insbesondere von 70 bis 95˚C unter Zugabe eines üblichen polyfunktionellen Kopplungsmittels unter üblichem Rühren unter Verzweigung gekoppelt.

Als Kopplungsmittel kommen an sich bekannte Polyepoxide, Polyvinylbenzole, insbesondere Polyvinylbenzol, Polyisocyanate, Dicarbonsäureester oder Siliciumpolyhalogenide in Frage. Bevorzugt wird epoxydiertes Leinsamenöl verwendet.

Vor der Isolierung der nach der Kopplung erhaltenen verzweigten Blockcopolymerisate kann ggf. eine Behandlung mit Protonendonatoren erfolgen, z.B. mit Wasser, Alkoholen, Carbonsäuren und dergleichen. Die Isolierung der Wertprodukte aus der Lösung erfolgt in üblicher Weise, z.B. unter Entfernen des Lösungsmittel durch Eindampfen oder durch Ausfällen, Abfiltrieren und Trocknen des Polymerisats.

Die nach dem erfindungsgemäßen Verfahren erhaltenen Produkte können unter Zusatz üblicher Hilfsmittel, wie Stabilisatoren, Gleitmittel, Antiblockmittel, Flammschutzmittel und ggf. auch Füllstoffe, zur Herstellung von Formteilen verwendet werden. Die Verarbeitung erfolgt dabei in an sich bekannter Weise nach den üblichen Verfahren, z.B. durch Extrudieren, Tiefziehen oder Spritzgießen. Die Produkte eignen sich insbesondere zur Herstellung von Formkörpern und Folien zur Verpackung. Selbstverständlich lassen sich die nach dem erfindungsgemäßen Verfahren erhaltenen Blockcopolymerisate mit Polystyrol, schlagfestem Styrol, SANCopolymerisaten oder Polyphenylenoxyd in beliebigen Verhältnissen abmischen. Auch können die genannten Blockcopolymerisate als Ausgangsbasis, z.B. für die Herstellung von Pfropfmischpolymerisaten, z.B. in Abmischung mit Polybutadien zur Herstellung von schlagfestem Polystyrol verwendet werden.

Nachstehend wird eine allgemeine Übersicht über die drei bevorzugten Herstellmethoden A, B und C mit Angabe der Abfolge der Verfahrensschritte, Angabe der allgemeinen und bevorzugten Mengenbereiche und der daraus berechneten relativen Blocklängen der lebenden Anionen vor der Kopplung gegeben.

Hinzuweisen ist noch darauf, daß in den Patentansprüchen die Zugabe einer Mischung aus Styrol und Dien als ein Verfahrensschritt bezeichnet wird, sodaß in den Ansprüchen insgesamt nur sechs Verfahrensschritte aufgeführt sind, obwohl nachstehend bei der Besprechung der einzelnen Verfahrensvarianten sieben, ja bis zu acht Verfahrensschritte angeführt sind, wobei jedoch jeweils bei der ZugabeReihenfolge durch einen Schrägstrich klargestellt ist, daß die zwischen den links und rechts des Schrägstriches genannten Monomerensorten und mengen in einem Schritt als Mischung zugegeben werden müssen.

Verfahrensvariante A gemäß Patentanspruch 1 (allgemein) und 2 (bevorzugt).

Es bedeuten für alle Verfahrensvarianten A bis C

| | | |
|---|---|---|
| Ix | = | lithiumorganischer Initiator |
| Sx | = | Styrol bzw. Polystyrolblock |
| Bx | = | konjugiertes Dien bzw. dessen Polymerblock |
| x | = | Index zur Kennzeichnung der Initiator oder Monomerportion |
| − | = | Monomerzugabe erst nach vollständigem Umsatz der vorangegangenen Monomerportion, bzw. scharf getrennter Blockübergang |
| / | = | Monomermischung |
| ↗ | = | verschmierter Blockübergang |
| [mmol] | = | mmol pro 100 g gesamtes Monomer (Styrol + Dien) |
| [g] | = | Gramm pro 100 g gesamtes Monomer (Styrol + Dien). |

A   Zugabereihenfolge I1-S1-B1-I2-S2-B2/S3

| Schritt | | allgemein | | | bevorzugt | | |
| | | [mmol] für $I_1$ und $I_2$ und [g] für die Monomeren | | | | | |
| 1 | I1 | 0.25 | - | 0.65 | 0.35 | - | 0.57 |
| 2 | S1 | 20 | - | 35 | 22 | - | 33 |
| 3 | B1 | 2 | - | 20 | 5 | - | 15 |
| 4 | I2 | 0.90 | - | 3.50 | 1.35 | - | 2.85 |
| 5 | S2 | 20 | - | 32 | 23 | - | 29 |
| 6 | B2 | 3 | - | 30 | 10 | - | 25 |
| 7 | S3 | 10 | - | 28 | 15 | - | 23 |
| Summen: | I | 1.15 | - | 4.15 | 1.70 | - | 3.42 |
| | S | 50 | - | 95 | 60 | - | 85 |
| | B | 50 | - | 5 | 40 | - | 15 |

Dies ergibt folgende Mischung von 5er- und 3er-Blöcken mit den relativen linearen Blocklängen vor der Kopplung:

|  | | allgemein [g ≙ Gew.%] | | bevorzugt [g ≙ Gew.%] | |
|---|---|---|---|---|---|
| S1-B1-S2-B2/S3: | S1 | 20 | - 35 | 22 | - 33 |
| | B1 | 2 | - 20 | 5 | - 15 |
| | S2 | 4.3 | - 5.0 | 4.7 | - 4.8 |
| | B2 | 0.7 | - 4.7 | 2.1 | - 4.2 |
| | S3 | 2.2 | - 4.4 | 3.1 | - 3.8 |
| S2-B2/S3: | S2 | 15.7 | - 27.0 | 18.3 | - 24.2 |
| | B2 | 2.3 | - 25.3 | 7.9 | - 20.8 |
| | S3 | 7.8 | - 23.6 | 11.9 | - 19.2 |

Verfahrensvariante B gemäß Patentanspruch 3 (allgemein) und 4 (bevorzugt):

B  Zugabereihenfolge I1-S1-B1-I2-S2-B2/S3

|  |  | allgemein | | | bevorzugt | | |
|---|---|---|---|---|---|---|---|
|  |  | [mmol] für $I_1$ und $I_2$ und [g] für die Monomeren | | | | | |
| 1 | I1 | 0.25 | - | 0.65 | 0.35 | - | 0.57 |
| 2 | S1 | 32 | - | 45 | 35 | - | 40 |
| 3 | B1 | 2 | - | 20 | 3 | - | 15 |
| 4 | I2 | 0.90 | - | 3.50 | 1.35 | - | 2.85 |
| 5 | S2 | 17 | - | 35 | 23 | - | 33 |
| 6 | B2 | 3 | - | 30 | 12 | - | 25 |
| 7 | S3 | 1 | - | 15 | 2 | - | 12 |
| Summen: | I | 1.15 | - | 4.15 | 1.70 | - | 3.42 |
|  | S | 50 | - | 95 | 60 | - | 85 |
|  | B | 50 | - | 5 | 40 | - | 15 |

Diese Zugabenreihenfolge ergibt eine Mischung von 5er- und 3er-Blöcken mit folgenden relativen linearen Blocklängen vor der Kopplung:

|  |  | allgemein | | | bevorzugt | | |
|---|---|---|---|---|---|---|---|
|  |  | [g $\hat{=}$ Gew.%] | | | [g $\hat{=}$ Gew.%] | | |
| S1-B1-S2-B2/S3: | S1 | 32 | - | 45 | 35 | - | 40 |
|  | B1 | 2 | - | 20 | 3 | - | 15 |
|  | S2 | 3.7 | - | 5.5 | 4.7 | - | 5.5 |
|  | B2 | 0.7 | - | 4.7 | 2.5 | - | 4.2 |
|  | S3 | 0.2 | - | 2.4 | 0.4 | - | 2.0 |

S2-B2/S3:  S2     13.3  -  29.5      18.3  -  27.5

           B2      2.3  -  25.3       9.5  -  20.8

           S3      0.8  -  12.6       1.6  -  10.0

Verfahrensvariante C gemäß Patentanspruch 5 (allgemein) und 6 (bevorzugt)

C   Zugabereihenfolge I1-S1-B1/S2-I2-S3-B2/S4

|   |    | allgemein | | | bevorzugt | | |
|---|----|-----------|---|---|-----------|---|---|
|   |    | [mmol] für $I_1$ und $I_2$ und [g] für die Monomeren | | | | | |
| 1 | I1 | 0.25 | - | 0.65 | 0.35 | - | 0.57 |
| 2 | S1 | 20 | - | 37 | 22 | - | 32 |
| 3 | B1 | 2 | - | 20 | 5 | - | 15 |
| 4 | S2 | 1 | - | 3 | 1 | - | 3 |
| 5 | I2 | 0.90 | - | 3.50 | 1.35 | - | 2.85 |
| 6 | S3 | 19 | - | 30 | 21 | - | 27 |
| 7 | B2 | 3 | - | 30 | 10 | - | 25 |
| 8 | S4 | 10 | - | 25 | 16 | - | 23 |
| Summen: | I | 1.15 | - | 4.15 | 1.70 | - | 3.42 |
|   | S | 50 | - | 95 | 60 | - | 85 |
|   | B | 50 | - | 5 | 40 | - | 15 |

Diese Zugabereihenfolge ergibt eine Mischung von 5er- und 3er-Blöcken mit folgenden relativen linearen Blocklängen vor der Kopplung:

8

|  |  | allgemein [g ≙ Gew.%] | bevorzugt [g ≙ Gew.%] |
|---|---|---|---|
| S1 – B1/S2 – S3 – B2↗S4: | S1 | 20 – 37 | 22 – 32 |
|  | B1 | 2 – 20 | 5 – 15 |
|  | S2 | 1 – 3 | 1 – 3 |
|  | S3 | 4.1 – 4.7 | 4.3 – 4.5 |
|  | B2 | 0.7 – 4.7 | 2.1 – 4.2 |
|  | S4 | 2.2 – 3.9 | 3.3 – 3.8 |
| S3 – B2↗S4: | S3 | 14.9 – 25.3 | 16.7 – 22.5 |
|  | B2 | 2.3 – 25.3 | 7.9 – 20.8 |
|  | S4 | 7.8 – 21.1 | 12.7 – 19.2 |

Die in den Beispielen und Vergleichsversuchen beschriebenen Parameter wurden wie folgt bestimmt:

1. Viskositätszahl, VZ, in [ml/g] nach DIN 53 726 bei 23°C .

2. Schmelzfluß, MFI, in [g/10 min.] bei 200°C und 5 kp Belastung nach DIN 53 735.

3. Die Brucharbeit in [N•mm] wurde im Zugversuch nach DIN 53 455 bestimmt. Sie spiegelt die absorbierte Energie bis zum Riß des Schulterstabs wieder und ergibt sich als Fläche unter den Spannungs – Dehnungskurve. Es wurden gepreßte Prüfkörper verwendet.

4. Die Transparenz, Tr, in [%] wurde an 300 $\mu$m starken Folien mit Hilfe eines Lange – Reflektometers mit Universalmeßeinheit UME 3, Meßkopf LT12 und Grünfilter VG9 bei senkrechter Bestrahlung be – stimmt.

5. Die Vernetzungsgrenze, V.G., in [°C] wurde aus dem Extrusionsdruck – Massetemperatur – Diagramm (Rheogramm) ermittelt, das mit Hilfe eines Göttfert – Rheographen (Fa. Göttfert) bei einer Aufheize – schwindigkeit von 70°C/h und einer Schergeschwindigkeit von $1.15•10^2 s^{-1}$ aufgezeichnet worden war. V.G. ist die zum Extrusionsdruckminimum gehörende Massetemperatur.

Die nachfolgenden Beispiele und Vergleichsversuche sollen das erfindungsgemäße Verfahren näher erläutern. Alle angegebenen Teile und Prozente beziehen sich, soweit nicht anders angegeben, auf das Gewicht.

Beispiele 1 bis 9 und Vergleichsversuche I bis VI.

Die Ansätze 1 bis 15 wurden jeweils in einem mit Stickstoff inertisierten 10 l – Rührkessel mit 5,60 kg Cyclohexan als vorgegebenes Lösungsmittel und einer Endpolymerkonzentration von 25 Gew.% durchge – führt. Als Initiator wurde sec. – Butyllithium als 1.45 N – Lösung in Cyclohexan mit ca. 8 Vol. – % Hexan verwendet. (= BuLi).

Vor Polymerisationsbeginn wurden die im System vorhandenen Spuren von reaktiven Verunreinigungen mit sec. – Butyllithium – Lösung "wegtitriert". Als Indikator wurden etwa 5 % der ersten Styrolportion vorgelegt. Beim Auftreten einer bleibenden, schwachen Gelbfärbung wurde die erste sec. – Butyllithium – menge und anschließend die Hauptmenge (95 %) der ersten Styrolportion zugegeben.

Nach der Kopplung wurden der Polymerlösung nach Abkühlen auf 30 bis 35°C jeweils in allen Beispielen und Vergleichsversuchen nacheinander zugesetzt:

| Isopropanol [Gew. – %] | 0.2 |
|---|---|
| ®Irganox 1076 (4) [Gew. – %] | 0.3 |
| ®Irgafos TNPP (5) [Gew. – %] | 1.0 |
| Minog 70 (6) [Gew. – %] | 1.8 |
| Polystyrol VPC (7) [Gew. – %] | 12.0 |
| Polystyrol 476 L (8) [Gew. – %] | 0.4 |

Anschließend wurde die Lösung auf 60°C erwärmt und das Lösungsmittel im Vakuum (< 1 mbar) verdampft.

Die Prüfergebnisse und Analysen sind in der Tabelle zusammengestellt.

Beispiel 1 (Methode C)

|  |  | Ansatz 1 | Ansatz 2 |
|---|---|---|---|
| **Stufe 1** |  |  |  |
| BuLi 1 | [mmol] | 0.375 | 0.375 |
| Styrol 1 | [g] | 24.6 | 30.1 |
| Poly.zeit (1) | [min] | 20 | 20 |
| Poly.temp. (2) | [°C] | 34/65 | 33/69 |
| **Stufe 2** |  |  |  |
| Butadien 1 | [g] | 13.0 | 7.5 |
| Styrol 2 | [g] | 1.4 | 1.4 |
| Poly.zeit | [min] | 22 | 22 |
| Poly.temp. | [°C] | 64/68 | 68/67 |
| **Stufe 3** |  |  |  |
| BuLi 2 | [mmol] | 1.96 | 1.96 |
| Styrol 3 | [g] | 26.4 | 26.4 |
| Poly.zeit | [min] | 16 | 26 |
| Poly.temp. | [°C] | 68/71 | 65/69 |
| **Stufe 4** |  |  |  |
| Butadien 2 | [g] | 12.7 | 18.2 |
| Styrol 4 | [g] | 22.8 | 17.3 |
| Poly.zeit | [min] | 50 | 47 |
| Poly.temp. | [°C] | 53/97 | 53/94 |
| **Stufe 5** |  |  |  |
| ®Edenol B 316 (3) | [g] | 0.3 | 0.3 |
| Kopplungszeit | [min] | 10 | 10 |
| Kopplungstemp. | [°C] | 97/89 | 94/83 |

Es bedeuten in allen Beispielen und den Vergleichversuchen:

[g] = Gramm pro hundert Gramm Gesamtmonomer
[mmol]= Millimol pro hundert Gramm Gesamtmonomer
(1) = Polymerisationszeit
(2) = Polymerisationstemperatur Beginn/Ende
(3) = Epoxidiertes Leinöl; Molmasse: 960 g/mol; Epoxidsauerstoff: 8,5; Dichte bei 20°C: 1.02 − 1.04; Fa. Henkel, Düsseldorf
(4) = phenolisches Antioxidans; Fa. Ciba − Geigy, Basel

(5) =        Trisnonylphenylphosphit; Stabilisator; Fa. Ciba – Geigy, Basel
(6) =        Fa. Wintershall, Düsseldorf; Weißöl
(7) =        Standard – Polystyrol; Fa. BASF, Ludwigshafen
(8) =        schlagzäh – modifiziertes Polystyrol; Antiblockmittel; Fa. BASF, Ludwigshafen

Beispiel 2 (Methode A)

|  |  | Ansatz 1 | Ansatz 2 |
|---|---|---|---|
| **Stufe 1** |  |  |  |
| BuLi 1 | [mmol] | 0.375 | 0.375 |
| Styrol 1 | [g] | 26.0 | 31.4 |
| Poly.zeit | [min] | 25 | 25 |
| Poly.temp. | [°C] | 35/68 | 32/69 |
| **Stufe 2** |  |  |  |
| Butadien 1 | [g] | 13.0 | 7.5 |
| Poly.zeit | [min] | 22 | 20 |
| Poly.temp. | [°C] | 62/68 | 59/67 |
| **Stufe 3** |  |  |  |
| BuLi 2 | [mmol] | 1.96 | 1.96 |
| Styrol 2 | [g] | 26.4 | 26.4 |
| Poly.zeit | [min] | 30 | 25 |
| Poly.temp. | [°C] | 55/68 | 55/64 |

|  |  | Ansatz 1 | Ansatz 2 |
|---|---|---|---|
| **Stufe 4** |  |  |  |
| Butadien 2 | [g] | 12.7 | 18.2 |
| Styrol 3 | [g] | 22.8 | 17.3 |
| Poly.zeit | [min] | 35 | 45 |
| Poly.temp. | [°C] | 52/87 | 52/93 |
| **Stufe 5** |  |  |  |
| Edenol B 316 | [g] | 0.3 | 0.3 |
| Kopplungszeit | [min] | 10 | 10 |
| Kopplungstemp. | [°C] | 89 | 93 |

Beispiel 3 (Methode B)

| | | Ansatz 5 | Ansatz 6 | Ansatz 7 | Ansatz 8 | Ansatz 9 |
|---|---|---|---|---|---|---|
| **Stufe 1** | | | | | | |
| BuLi 1 | [mmol] | 0.462 | 0.533 | 0.395 | 0.462 | 0.533 |
| Styrol 1 | [g] | 36.9 | 36.9 | 36.9 | 36.9 | 36.9 |
| Poly.zeit | [min] | 20 | 20 | 20 | 20 | 20 |
| Poly.temp. | [$^0$C] | 33/65 | -- | -- | -- | -- |
| **Stufe 2** | | | | | | |
| Butadien 1 | [g] | 4.6 | 4.6 | 4.6 | 4.6 | 4.6 |
| Poly.zeit | [min] | 22 | 22 | 22 | 22 | 22 |
| Poly.temp. | [$^0$C] | 64/68 | -- | -- | -- | -- |
| **Stufe 3** | | | | | | |
| BuLi 2 | [mmol] | 1.85 | 1.60 | 1.39 | 1.85 | 1.60 |
| Styrol 2 | [g] | 25.2 | 25.2 | 30.8 | 30.8 | 30.8 |
| Poly.zeit | [min] | 20 | 20 | 20 | 20 | 20 |
| Poly.temp. | [$^0$C] | 68/71 | -- | 68/72 | -- | -- |
| **Stufe 4** | | | | | | |
| Butadien 2 | [g] | 24.5 | 24.5 | 24.5 | 24.5 | 24.5 |
| Styrol 3 | [g] | 9.1 | 9.1 | 3.5 | 3.5 | 3.5 |
| Poly.zeit | [min] | 45 | 45 | 45 | 45 | 45 |
| Poly.temp. | [$^0$C] | 53/87 | -- | -- | -- | -- |
| **Stufe 5** | | | | | | |
| Edenol B 316 | [g] | 0.3 | 0.3 | 0.3 | 0.3 | 0.3 |
| Kopplungzeit | [min] | 10 | 10 | 10 | 10 | 10 |
| Kopplungstemp. | [$^0$C] | 87 | -- | -- | -- | -- |

Vergleichsversuch I (entsprechend der Lehre von DE-AS 19 59 922, außer daß die erste Styrolportion auf zweimal zugegeben wurde)

Ansatz 10

Stufe 1

| BuLi | [mmol] | 0.375 |
| Styrol 1 | [g] | 31.0 |
| Poly.zeit | [min] | 21 |
| Polytemp. | [$^0$C] | 34/67 |

Stufe 2

| Styrol 2 | [g] | 7.3 |
| Poly.zeit | [min] | 13 |
| Polytemp. | [$^0$C] | 67/59 |

Stufe 3

| BuLi 2 | [mmol] | 1.96 |
| Styrol 3 | [g] | 36.0 |
| Poly.zeit | [min] | 31 |
| Polytemp. | [$^0$C] | 55/58 |

Stufe 4

| Butadien | [g] | 25.7 |
| Poly.zeit | [min] | 33 |
| Polytemp. | [$^0$C] | 58/91 |

Stufe 5

| Edenol B 316 | [g] | 0.3 |
| Kopplungszeit | [min] | 10 |
| Kopplungstemp. | [$^0$C] | 91/85 |

13

Vergleichsversuch II (entsprechend der Lehre von DE-PS 25 50 227, außer daß die erste Styrolportion auf zweimal zugegeben wurde)

Ansatz 11

Stufe 1

| BuLi 1 | [mmol] | 0.375 |
| Styrol 1 | [g] | 33.8 |
| Poly.zeit | [min] | 18 |
| Polytemp. | [°C] | 32/66 |

Stufe 2

| Styrol 2 | [g] | 10.4 |
| Poly.zeit | [min] | 15 |
| Polytemp. | [°C] | 66/60 |

Stufe 3

| BuLi 2 | [mmol] | 1.96 |
| Styrol 3 | [g] | 21.2 |
| Poly.zeit | [min] | 29 |
| Polytemp. | [°C] | 55/58 |

Stufe 4

| Butadien | [g] | 25.7 |
| Styrol 4 | [g] | 8.9 |
| Poly.zeit | [min] | 33 |
| Polytemp. | [°C] | 52/91 |

Stufe 5

| Edenol B 316 | [g] | 0.3 |
| Kopplungszeit | [min] | 10 |
| Kopplungstemp. | [°C] | 91/85 |

14

Vergleichsversuch III (entsprechend der Lehre von EP-A 1 0153 727)

Ansatz 12 (III)

Stufe 1

| BuLi 1 | [mmol] | 0.40 |
| Styrol 1 | [g] | 37.0 |
| Poly.zeit | [min] | 35 |
| Polytemp. | [$^0$C] | 33/62 |

Stufe 2

| Butadien 1 | [g] | 3.0 |
| Poly.zeit | [min] | 20 |
| Polytemp. | [$^0$C] | 60/60 |

Stufe 3

| BuLi 2 | [mmol] | 0.40 |
| Styrol 2 | [g] | 15.0 |
| Poly.zeit | [min] | 20 |
| Polytemp. | [$^0$C] | 55/59 |

Stufe 4

| Butadien 2 | [g] | 3.0 |
| Poly.zeit | [min] | 20 |
| Polytemp. | [$^0$C] | 60/60 |

Stufe 5

| BuLi 3 | [mmol] | 1.70 |
| Styrol 3 | [g] | 20.0 |
| Polyzeit | [min] | 25 |
| Polytemp. | [$^0$C] | 60/68 |

Stufe 6

| Butadien 3 | [g] | 22.0 |
| Polyzeit | [min] | 30 |
| Polytemp. | [$^0$C] | 68/70 |

Ansatz 12 (III)

Stufe 7

| Edenol B 316 | [g] | 0.3 |
| Kopplungszeit | [min] | 15 |
| Kopplungstemp. | [°C] | 70 |

Vergleichsversuch IV

IV
Ansatz 13

Stufe 1

| BuLi 1 | [mmol] | 0.375 |
| Styrol 1 | [g] | 26.0 |
| Poly.zeit | [min] | 35 |
| Polytemp. | [°C] | 31/59 |

Stufe 2

| Butadien 1 | [g] | 13.0 |
| Poly.zeit | [min] | 25 |
| Polytemp. | [°C] | 59/63 |

Stufe 3

| BuLi 2 | [mmol] | 1.96 |
| Styrol 2 | [g] | 48.8 |
| Poly.zeit | [min] | 40 |
| Polytemp. | [°C] | 55/66 |

Stufe 4

| Butadien 2 | [g] | 12.2 |
| Poly.zeit | [min] | 25 |
| Polytemp. | [°C] | 52/73 |

Stufe 5

| Edenol B 316 | [g] | 0.3 |
| Kopplungszeit | [min] | 15 |
| Kopplungstemp. | [°C] | 70 |

16

Vergleichsversuch V + VI

|  |  | Ansatz 14 (V) | Ansatz 15 (VI) |
|---|---|---|---|
| **Stufe 1** |  |  |  |
| BuLi 1 | [mmol] | 0.375 | 0.375 |
| Styrol 1 | [g] | 24.6 | 30.1 |
| Poly.zeit | [min] | 22 | 20 |
| Polytemp. | [$^0$C] | 32/66 | 32/69 |
| **Stufe 2** |  |  |  |
| Butadien 1 | [g] | 13.0 | 7.5 |
| Styrol 2 | [g] | 1.4 | 1.4 |
| Poly.zeit | [min] | 23 | 19 |
| Polytemp. | [$^0$C] | 66/64 | 68/65 |
| **Stufe 3** |  |  |  |
| BuLi 2 | [mmol] | 1.96 | 1.96 |
| Styrol 3 | [g] | 48.0 | 43.7 |
| Poly.zeit | [min] | 20 | 30 |
| Polytemp. | [$^0$C] | 64/75 | 64/72 |
| **Stufe 4** |  |  |  |
| Butadien 2 | [g] | 13.0 | 17.3 |
| Poly.zeit | [min] | 22 | 25 |
| Polytemp. | [$^0$C] | 52/81 | 52/77 |
| **Stufe 5** |  |  |  |
| Edenol B 316 | [g] | 0.3 | 0.3 |
| Kopplungszeit | [min] | 10 | 10 |
| Kopplungstemp. | [$^0$C] | 80 | 80 |

Tabelle

Prüfungsergebnisse der Ansätze 1 bis 15

| Beispiel | (1) Blockaufbau /Methode | (2) MFI [g/10 min] | (3) VZ [ml/g] | (4) Brucharbeit [Nmm] | (5) Tr [%] | (6) V.G. [°C] |
|---|---|---|---|---|---|---|
| **Beispiele:** | | | | | | |
| 1 | C | 19.7 | 84.0 | 730 | - | 240 |
| 2 | C | 12.5 | 82.5 | 2230 | 90.3 | 248 |
| 3 | A | 12.2 | 80.9 | 1100 | 90.3 | - |
| 4 | A | 8.7 | 83.9 | 2230 | 90.4 | 243 |
| 5 | B | 14.4 | 77.8 | 2040 | - | 263 |
| 6 | B | 10.4 | 77.3 | 980 | - | 261 |
| 7 | B | 8.2 | 77.8 | 1240 | - | 261 |
| 8 | B | 9.7 | 78.8 | - | - | 261 |
| 9 | B | 9.1 | 81.7 | 700 | - | 257 |

Vergleichsversuche:

| I | S1-S2-S3-B<br>+ S3-B | 5.8 | 78.7 | 640 | 90.3 | 251 |
| II | S1-S2-B/S3<br>+ S2-B/S3 | 9.4 | 79.6 | 430 | 90.3 | 250 |
| III | S1-B1-S2-B2-S3-B3<br>+ S2-B2-S3-B3<br>+ S3-B3 | 9.7 | 84.0 | 630 | 90.3 | 254 |
| IV | S1-B1-S2-B2<br>+ S2-B2 | 4.1 | 83.7 | 120 | 89.9 | 243 |
| V | S1-B1/S2-S3-B2<br>+ S3-B2 | 6.2 | 85.5 | 170 | 89.6 | 235 |
| VI | S1-B1/S2-S3-B2<br>+ S3-B2 | 5.1 | 81.0 | 160 | 90.7 | 248 |

(1) Blockaufbau der Blockcopolymere vor der Kupplung bzw. Blockaufbau entsprechend erfindungsgemäßer Methode A, B oder C

(2) Melt Flow Index

(3) Viskositätszahl des gekoppelten Sternblockcopolymerisats

(4) Brucharbeit aus dem Zugversuch

(5) Transparenz

(6) Vernetzungsgrenze aus dem Rheogramm

Die nach dem erfindungsgemäßen Verfahren hergestellten Blockcopolymere besitzen höhere MFI-Werte, d.h. sie fließen wesentlich besser und sind damit leichter verarbeitbar als vergleichbare Produkte, deren sternförmiger Blockaufbau durch eine andere Reihenfolge der Reaktorbeschickung erzielt wurde.

Die nach dem erfindungsgemäßen Verfahren zugänglichen Blockcopolymere sind ebenfalls in der Zähigkeit, ausgedrückt durch die Brucharbeit aus dem Zugversuch, überlegen und weisen eine hohe Lichtdurchlässigkeit (vgl. Transparenz) auf.

Die Vernetzungsgrenze, wie sie sich aus dem Rheogramm ergibt, liegt für die nach dem erfindungsgemäßen Verfahren hergestellten Polymere mindestens auf gleichem Niveau wie die der Produkte aus der Vergleichsverfahren, zum Teil auch deutlich höher.

## Patentansprüche

1. Verfahren zur diskontinuierlichen Herstellung von unsymmetrisch aufgebauten, sternförmig verzweigten Blockcopolymerisaten, die, bezogen auf das verzweigte Blockcopolymerisat, 50 bis 95 Gew.% Styrol und 50 bis 5 Gew.% eines konjugierten Diens mit 4 bis 5 C-Atomen einpolymerisiert enthalten, durch
a) sequentielle anionische Polymerisation ggf. unterschiedlich bemessener Styrol- und Dien-Mengen in Gegenwart eines Lösungsmittels und unter Verwendung einer lithiumorganischen Verbindung als Initiator, von der ein kleinerer Anteil zu Beginn der sequentiellen Polymerisation und ein größerer Anteil danach zugegeben wird und wobei die sequentiell zugegeben Monomermengen jeweils vollständig auspolymerisiert werden, und

EP 0 316 671 B1

b) Kopplung der durch sequentielle anionische Polymerisation gebildeten Mischung von lebenden Blockcopolymeranionen bimodaler Molmassenverteilung mit an sich bekannten polyfunktionellen Kopplungsmitteln unter an sich bekannten Bedingungen und ggf. anschließender Behandlung mit Protonendonatoren, Entfernen des Lösungsmittels und Gewinnung des Wertproduktes, dadurch gekennzeichnet, daß der wasserfreies, (austitriertes) Lösungsmittel als Vorlage enthaltende Poly‐merisationsreaktor mit den Initiatormengen $I_n$ und den Monomeren Styrol und Dien in den Mengen $S_n$ und $B_n$ beschickt wird und letztere in der nachfolgend genannten Folge polymerisiert werden:

| | Initiator | Menge [mmol] | Art des Monomeren | Menge [g] |
|---|---|---|---|---|
| 1. Schritt | $I_1$ | 0,25 – 0,65 | – – | – – |
| 2. Schritt | – – | – – | $S_1$ | 20 – 35 |
| 3. Schritt | – – | – – | $B_1$ | 2 – 20 |
| 4. Schritt | $I_2$ | 0,90 – 3,50 | – – | – – |
| 5. Schritt | – – | – – | $S_2$ | 20 – 32 |
| 6. Schritt | – – | – – | Gemisch $B_2 + S_3$ | 3 – 30/10 – 28 |

wobei stehen für

[mmol] Millimol Initiator, bezogen auf 100 g der gesamten Menge der Monomeren Styrol und Dien.

[g] Gramm Monomerensorte, bezogen auf 100 g der gesamten Menge Styrol und Dien.

2. Verfahren nach Anspruch 1, dadurch gekennzeichnet, daß Sternblockcopolymerisate, die 60 bis 85 Gew.% Styrol und 40 bis 15 Gew.% konjugiertes Dien enthalten, hergestellt werden, wobei die Monomeren in den nachstehend genannten Mengen mit den genannten Initiatormengen polymerisiert werden:

| | Initiator | Menge [mmol] | Art des Monomeren | Menge [g] |
|---|---|---|---|---|
| 1. Schritt | $I_1$ | 0,35 – 0,57 | – – | – – |
| 2. Schritt | – – | – – | $S_1$ | 22 – 33 |
| 3. Schritt | – – | – – | $B_1$ | 5 – 15 |
| 4. Schritt | $I_2$ | 1,35 – 2,85 | – – | – – |
| 5. Schritt | – – | – – | $S_2$ | 23 – 39 |
| 6. Schritt | – – | – – | Gemisch $B_2 + S_3$ | 10 – 25/15 – 23 |

3. Verfahren zur diskontinuierlichen Herstellung von unsymmetrisch aufgebauten sternförmig verzweigten Blockcopolymerisaten, die, bezogen auf das verzweigte Blockcopolymerisat, 50 bis 95 Gew.% Styrol und 50 bis 5 Gew.% eines konjugierten Diens mit 4 bis 5 C‐Atomen einpolymerisiert enthalten, durch
   a) sequentielle anionische Polymerisation ggf. unterschiedlich bemessener Styrol‐ und Dien‐ Mengen in Gegenwart eines Lösungsmittels und unter Verwendung einer lithiumorganischen Ver‐ bindung als Initiator, von der ein kleinerer Anteil zu Beginn der sequentiellen Polymerisation und ein größerer Anteil danach zugegeben wird und wobei die sequentiell zugegeben Monomermengen jeweils vollständig auspolymerisiert werden, und
   b) Kopplung der durch sequentielle anionische Polymerisation gebildeten Mischung von lebenden Blockcopolymeranionen bimodaler Molmassenverteilung mit an sich bekannten polyfunktionellen Kopplungsmitteln unter an sich bekannten Bedingungen und ggf. anschließender Behandlung mit Protonendonatoren, Entfernen des Lösungsmittels und Gewinnung des Wertproduktes, dadurch gekennzeichnet, daß der wasserfreies (austitriertes), Lösungsmittel als Vorlage enthaltende Poly‐merisationsreaktor mit den Initiatormengen $I_n$ und den Monomeren Styrol und Dien in den Mengen $S_n$ und $B_n$ beschickt wird und letztere in der nachfolgend genannten Folge polymerisiert werden:

20

| | Initiator | Menge [mmol] | Art des Monomeren | Menge [g] |
|---|---|---|---|---|
| 1. Schritt | $I_1$ | 0,25 – 0,65 | – – | – – |
| 2. Schritt | – – | – – | $S_1$ | 32 – 45 |
| 3. Schritt | – – | – – | $B_1$ | 2 – 20 |
| 4. Schritt | $I_2$ | 0,90 – 3,50 | – – | – – |
| 5. Schritt | – – | – – | $S_2$ | 17 – 35 |
| 6. Schritt | – – | – – | Gemisch $B_2 + S_3$ | 3 – 30/1 – 15 |

wobei stehen für

[mmol] Millimol Initiator, bezogen auf 100 g der gesamten Menge der Monomeren Styrol und Dien.

[g] Gramm Monomerensorte, bezogen auf 100 g der gesamten Menge Styrol und Dien

**4.** Verfahren nach Anspruch 3, dadurch gekennzeichnet, daß Sternblockcopolymerisate, die 60 bis 85 Gew.% Styrol und 40 bis 15 Gew.% konjugiertes Dien enthalten hergestellt werden, wobei die Monomeren in den nachstehend genannten Mengen mit den genannten Initiatormengen polymerisiert werden:

| | Initiator | Menge [mmol] | Art des Monomeren | Menge [g] |
|---|---|---|---|---|
| 1. Schritt | $I_1$ | 0,35 – 0,57 | – – | – – |
| 2. Schritt | – – | – – | $S_1$ | 35 – 40 |
| 3. Schritt | – – | – – | $B_1$ | 3 – 15 |
| 4. Schritt | $I_2$ | 1,35 – 2,85 | – – | – – |
| 5. Schritt | – – | – – | $S_2$ | 23 – 33 |
| 6. Schritt | – – | – – | Gemisch $B_2 + S_3$ | 12 – 25/2 – 12 |

**5.** Verfahren zur diskontinuierlichen Herstellung von unsymmetrisch aufgebauten, sternförmig verzweigten Blockcopolymerisaten, die, bezogen auf das verzweigte Blockcopolymerisat, 50 bis 95 Gew.% Styrol und 50 bis 5 Gew.% eines konjugierten Diens mit 4 bis 5 C – Atomen einpolymerisiert enthalten, durch
a) sequentielle anionische Polymerisation ggf. unterschiedlich bemessener Styrol – und Dien – Mengen in Gegenwart eines Lösungsmittels und unter Verwendung einer lithiumorganischen Ver – bindung als Initiator, von der ein kleinerer Anteil zu Beginn der sequentiellen Polymerisation und ein größerer Anteil danach zugegeben wird und wobei die sequentiell zugegeben Monomermengen jeweils vollständig auspolymerisiert werden, und
b) Kopplung der durch sequentielle anionische Polymerisation gebildeten Mischung von lebenden Blockcopolymeranionen bimodaler Molmassenverteilung mit an sich bekannten polyfunktionellen Kopplungsmitteln unter an sich bekannten Bedingungen und ggf. anschließender Behandlung mit Protonendonatoren, Entfernen des Lösungsmittels und Gewinnung des Wertproduktes, dadurch gekennzeichnet, daß der wasserfreies (austitriertes), Lösungsmittel als Vorlage enthaltende Poly – merisationsreaktor mit den Initiatormengen $I_n$ und den Monomeren Styrol und Dien in den Mengen $S_n$ und $B_n$ beschickt wird und letztere in der nachfolgend genannten Folge polymerisiert werden:

|  | Initiator | Menge [mmol] | Art des Monomeren | Menge [g] |
|---|---|---|---|---|
| 1. Schritt | $I_1$ | $0{,}25 - 0{,}65$ | $--$ | $--$ |
| 2. Schritt | $--$ | $--$ | $S_1$ | $20 - 37$ |
| 3. Schritt | $--$ | $--$ | Gemisch $B_1 + S_2$ | $2 - 20/1 - 3$ |
| 4. Schritt | $I_2$ | $0{,}90 - 3{,}50$ | $--$ | $--$ |
| 5. Schritt | $--$ | $--$ | $S_3$ | $19 - 30$ |
| 6. Schritt | $--$ | $--$ | Gemisch $B_2 + S_4$ | $3 - 30/10 - 25$ |

wobei stehen für

[mmol] Millimol Initiator, bezogen auf 100 g der gesamten Menge der Monomeren Styrol und Dien.

[g] Gramm Monomerensorte, bezogen auf 100 g der gesamten Menge Styrol und Dien

**6.** Verfahren nach Anspruch 5, dadurch gekennzeichnet, daß Sternblockcopolymerisate, die 60 bis 85 Gew.% Styrol und 40 bis 15 Gew.% konjugiertes Dien enthalten hergestellt werden, wobei die Monomeren in den nachstehend genannten Mengen mit den genannten Initiatormengen polymerisiert werden:

|  | Initiator | Menge [mmol] | Art des Monomeren | Menge [g] |
|---|---|---|---|---|
| 1. Schritt | $I_1$ | $0{,}35 - 0{,}57$ | $--$ | $--$ |
| 2. Schritt | $--$ | $--$ | $S_1$ | $22 - 32$ |
| 3. Schritt | $--$ | $--$ | Gemisch $B_1 + S_2$ | $5 - 15/1 - 3$ |
| 4. Schritt | $I_2$ | $1{,}35 - 2{,}85$ | $--$ | $--$ |
| 5. Schritt | $--$ | $--$ | $S_3$ | $21 - 27$ |
| 6. Schritt | $--$ | $--$ | Gemisch $B_2 + S_4$ | $10 - 25/16 - 23$ |

**7.** Sternförmig verzweigte Blockcopolymerisate erhältlich nach Ansprüchen 1 bis 6.

**8.** Verwendung der Blockcopolymerisate gemäß Anspruch 7 zur Herstellung von Formteilen.

**9.** Formteile aus Blockcopolymerisaten gemäß Anspruch 7.

**Claims**

**1.** A process for the batchwise preparation of an asymmetric star block copolymer which contains, based on the star block copolymer, from 50 to 95 % by weight of styrene and from 50 to 5% by weight of a conjugated diene of 4 or 5 carbon atoms as polymerized units, by
a) sequential anionic polymerization of identical or different amounts of styrene and diene in the presence of a solvent and with the use of an organolithium compound as an initiator, a smaller amount of which is added at the beginning of the sequential polymerization and a larger amount thereafter, and the sequentially added amounts of monomers each being completely polymerized, and
b) coupling of the mixture of living block copolymer anions formed by sequential anionic polymerization and having a bimodal molecular weight distribution with conventional polyfunctional coupling agents under conventional conditions and, if required, subsequent treatment with proton donors, removal of the solvent and isolation of the desired product, wherein the polymerization reactor containing anhydrous (pretitrated) solvent is fed with the initiator amounts $I_n$ and the monomers styrene and diene in amounts $S_n$ and $B_n$ and the latter are polymerized in the sequence stated below:

|  | Initiator | Amount [mmol] | Type of monomer | Amount [g] |
|---|---|---|---|---|
| 1st step | $I_1$ | $0.25 - 0.65$ | $--$ | $--$ |
| 2nd step | $--$ | $--$ | $S_1$ | $20 - 35$ |
| 3rd step | $--$ | $--$ | $B_1$ | $2 - 20$ |
| 4th step | $I_2$ | $0.90 - 3.50$ | $--$ | $--$ |
| 5th step | $--$ | $--$ | $S_2$ | $20 - 32$ |
| 6th step | $--$ | $--$ | mixture $B_2 + S_3$ | $3 - 30/10 - 28$ |

where

[mmol] is millimole of initiator, based on 100 g of the total amount of the monomers styrene and diene,

[g] is grams of monomer type, based on 100 g of the total amount of styrene and diene.

2. A process as claimed in claim 1, wherein a star block copolymer which contains from 60 to 85% by weight of styrene and from 40 to 15% by weight of conjugated diene is prepared, the monomers being polymerized in an amount stated below with the stated amounts of initiator:

|  | Initiator | Amount [mmol] | Type of monomer | Amount [g] |
|---|---|---|---|---|
| 1st step | $I_1$ | $0.35 - 0.57$ | $--$ | $--$ |
| 2nd step | $--$ | $--$ | $S_1$ | $22 - 33$ |
| 3rd step | $--$ | $--$ | $B_1$ | $5 - 15$ |
| 4th step | $I_2$ | $1.35 - 2.85$ | $--$ | $--$ |
| 5th step | $--$ | $--$ | $S_2$ | $23 - 39$ |
| 6th step | $--$ | $--$ | mixture $B_2 + S_3$ | $10 - 25/15 - 23$ |

3. A process for the batchwise preparation of an asymmetric star block copolymer which contains, based on the star block copolymer, from 50 to 95 % by weight of styrene and from 50 to 5% by weight of a conjugated diene of 4 or 5 carbon atoms as polymerized units, by

a) sequential anionic polymerization of identical or different amounts of styrene and diene in the presence of a solvent and with the use of an organolithium compound as an initiator, a smaller amount of which is added at the beginning of the sequential polymerization and a larger amount thereafter, and the sequentially added amounts of monomers each being completely polymerized, and

b) coupling of the mixture of living block copolymer anions formed by sequential anionic polymerization and having a bimodal molecular weight distribution with conventional polyfunctional coupling agents under conventional conditions and, if required, subsequent treatment with proton donors, removal of the solvent and isolation of the desired product, wherein the polymerization reactor containing anhydrous (pretitrated) solvent is fed with the initiator amounts $I_n$ and the monomers styrene and diene in amounts $S_n$ and $B_n$ and the latter are polymerized in the sequence stated below:

|  | Initiator | Amount [mmol] | Type of monomer | Amount [g] |
|---|---|---|---|---|
| 1st step | $I_1$ | $0.25 - 0.65$ | $--$ | $--$ |
| 2nd step | $--$ | $--$ | $S_1$ | $32 - 45$ |
| 3rd step | $--$ | $--$ | $B_1$ | $2 - 20$ |
| 4th step | $I_2$ | $0.90 - 3.50$ | $--$ | $--$ |
| 5th step | $--$ | $--$ | $S_2$ | $17 - 35$ |
| 6th step | $--$ | $--$ | mixture $B_2 + S_3$ | $3 - 30/1 - 15$ |

where

[mmol] is millimole of initiator, based on 100 g of the total amount of the monomers styrene and diene,

(g) is grams of monomer type, based on 100 g of the total amount of styrene and diene.

4. A process as claimed in claim 3, wherein a star block copolymer which contains from 60 to 85% by weight of styrene and from 40 to 15% by weight of conjugated diene is prepared, the monomers being polymerized in an amount stated below with the stated amounts of initiator:

|  | Initiator | Amount [mmol] | Type of monomer | Amount [g] |
|---|---|---|---|---|
| 1st step | $I_1$ | $0.35 - 0.57$ | $--$ | $--$ |
| 2nd step | $--$ | $--$ | $S_1$ | $35 - 40$ |
| 3rd step | $--$ | $--$ | $B_1$ | $3 - 15$ |
| 4th step | $I_2$ | $1.35 - 2.85$ | $--$ | $--$ |
| 5th step | $--$ | $--$ | $S_2$ | $23 - 33$ |
| 6th step | $--$ | $--$ | mixture $B_2 + S_3$ | $12 - 25/2 - 12$ |

5. A process for the batchwise preparation of an asymmetric star block copolymer which contains, based on the star block copolymer, from 50 to 95 % by weight of styrene and from 50 to 5% by weight of a conjugated diene of 4 or 5 carbon atoms as polymerized units, by

a) sequential anionic polymerization of identical or different amounts of styrene and diene in the presence of a solvent and with the use of an organolithium compound as an initiator, a smaller amount of which is added at the beginning of the sequential polymerization and a larger amount thereafter, and the sequentially added amounts of monomers each being completely polymerized, and

b) coupling of the mixture of living block copolymer anions formed by sequential anionic polymerization and having a bimodal molecular weight distribution with conventional polyfunctional coupling agents under conventional conditions and, if required, subsequent treatment with proton donors, removal of the solvent and isolation of the desired product, wherein the polymerization reactor containing anhydrous (pretitrated) solvent is fed with the initiator amounts $I_n$ and the monomers styrene and diene in amounts $S_n$ and $B_n$ and the latter are polymerized in the sequence stated below:

|  | Initiator | Amount [mmol] | Type of monomer | Amount [g] |
|---|---|---|---|---|
| 1st step | $I_1$ | $0.25 - 0.65$ | $--$ | $--$ |
| 2nd step | $--$ | $--$ | $S_1$ | $20 - 37$ |
| 3rd step | $--$ | $--$ | mixture $B_1 + S_2$ | $2 - 20/1 - 3$ |
| 4th step | $I_2$ | $0.90 - 3.50$ | $--$ | $--$ |
| 5th step | $--$ | $--$ | $S_3$ | $19 - 30$ |
| 6th step | $--$ | $--$ | mixture $B_2 + S_4$ | $3 - 30/10 - 25$ |
| where | | | | |
| [mmol] is millimole of initiator, based on 100 g of the total amount of the monomers styrene and diene. | | | | |
| [g] is grams of monomer type, based on 100 g of the total amount of styrene and diene. | | | | |

6. A process as claimed in claim 5, wherein a star block copolymer which contains from 60 to 85% by weight of styrene and from 40 to 15% by weight of conjugated diene is prepared, the monomers being polymerized in an amount stated below with the stated amounts of initiator:

|  | Initiator | Amount [mmol] | Type of monomer | Amount [g] |
|---|---|---|---|---|
| 1st step | $I_1$ | $0.35 - 0.57$ | $--$ | $--$ |
| 2nd step | $--$ | $--$ | $S_1$ | $22 - 32$ |
| 3rd step | $--$ | $--$ | mixture $B_1 + S_2$ | $5 - 15/1 - 3$ |
| 4th step | $I_2$ | $1.35 - 2.85$ | $--$ | $--$ |
| 5th step | $--$ | $--$ | $S_3$ | $21 - 27$ |
| 6th step | $--$ | $--$ | mixture $B_2 + S_4$ | $10 - 25/16 - 23$ |

24

**7.** A star block copolymer obtainable as claimed in any of claims 1 to 6.

**8.** Use of a block copolymer as claimed in claim 7 for the production of moldings.

**9.** A molding obtained from a block copolymer as claimed in claim 7.

**Revendications**

**1.** Procédé de préparation discontinue de copolymères séquencés ramifiés en étoile, de structure asymétrique, qui contiennent en liaison polymère, par rapport au copolymère séquencé ramifié, de 50 à 95% en poids de styrène et de 50 à 5% en poids d'un diène conjugué à $4-5$ atomes de carbone, par

    a) polymérisation anionique successive de quantités éventuellement différentes de styrène et de diène, en présence d'un solvant et avec utilisation d'un composé organique du lithium servant d'initiateur, dont une petite partie est ajoutée au début de la polymérisation successive et une grande partie est ensuite ajoutée, les quantités de monomères ajoutées successivement étant chaque fois polymérisées complètement, et

    b) copulation du mélange d'anions vivants de copolymère séquencé ayant une distribution bimodale des masses molaires, mélange qui est formé par polymérisation anionique successive, avec des agents de copulation polyfonctionnels en soi connus, dans des conditions en soi connues, suivie éventuellement de traitement par des donneurs de protons, élimination du solvant et récupération du produit de valeur,

caractérisé en ce que le réacteur de polymérisation, contenant le solvant anhydre (titré) en tant que charge préalable, est chargé des quantités d'initiateur $I_n$ et des monomères styrène et diène dans les quantités $S_n$ et $B_n$ et ces derniers sont polymérisés dans l'ordre indiqué ci-après:

| | Initiateur | Quantité (mmoles) | Sorte de monomère | Quantité (g) |
|---|---|---|---|---|
| 1ère étape | $I_1$ | $0,25-0,65$ | $--$ | $--$ |
| 2ème étape | $--$ | $--$ | $S_1$ | $20-35$ |
| 3ème étape | $--$ | $--$ | $B_1$ | $2-20$ |
| 4ème étape | $I_2$ | $0,90-3,50$ | $--$ | $--$ |
| 5ème étape | $--$ | $--$ | $S_2$ | $20-32$ |
| 6ème étape | $--$ | $--$ | Mélange $B_2 + S_3$ | $3-30/10-28$ |

avec

(mmoles) = Millimoles d'initiateur, par rapport à 100 g de la quantité totale des monomères styrène et diène,

(g) = Grammes des sortes de monomères, par rapport à 100 g de la quantité totale de styrène et de diène.

**2.** Procédé selon la revendication 1, caractérisé en ce qu'on prépare des copolymères séquencés étoilés qui contiennent de 60 à 85% en poids de styrène et de 40 à 15% en poids de diène conjugué, les monomères étant polymérisés dans les quantités indiquées ci-après avec les quantités d'initiateur spécifiées:

| | Initiateur | Quantité (mmoles) | Sorte de monomère | Quantité (g) |
|---|---|---|---|---|
| 1ère étape | $I_1$ | $0,35-0,57$ | $--$ | $--$ |
| 2ème étape | $--$ | $--$ | $S_1$ | $22-33$ |
| 3ème étape | $--$ | $--$ | $B_1$ | $5-15$ |
| 4ème étape | $I_2$ | $1,35-2,85$ | $--$ | $--$ |
| 5ème étape | $--$ | $--$ | $S_2$ | $23-39$ |
| 6ème étape | $--$ | $--$ | Mélange $B_2 + S_3$ | $10-25/15-23$ |

EP 0 316 671 B1

**3.** Procédé de préparation discontinue de copolymères séquencés ramifiés en étoile, de structure asymétrique, qui contiennent en liaison polymère, par rapport au copolymère séquencé ramifié, de 50 à 95% en poids de styrène et de 50 à 5% en poids d'un diène conjugué à $4-5$ atomes de carbone, par

a) polymérisation anionique successive de quantités éventuellement différentes de styrène et de diène, en présence d'un solvant et avec utilisation d'un composé organique du lithium servant d'initiateur, dont une petite partie est ajoutée au début de la polymérisation successive et une grande partie est ensuite ajoutée, les quantités de monomères ajoutées successivement étant chaque fois polymérisées complètement, et

b) copulation du mélange d'anions vivants de copolymère séquencé ayant une distribution bimodale des masses molaires, mélange qui est formé par polymérisation anionique successive, avec des agents de copulation polyfonctionnels en soi connus, dans des conditions en soi connues, suivie éventuellement de traitement par des donneurs de protons, élimination du solvant et récupération du produit de valeur,

caractérisé en ce que le réacteur de polymérisation, contenant le solvant anhydre (titré) en tant que charge préalable, est chargé des quantités d'initiateur $I_n$ et des monomères styrène et diène dans les quantités $S_n$ et $B_n$, et ces derniers sont polymérisés dans l'ordre indiqué ci-après:

| | Initiateur | Quantité (mmoles) | Sorte de monomère | Quantité (g) |
|---|---|---|---|---|
| 1ère étape | $I_1$ | $0,25-0,65$ | $- -$ | $- -$ |
| 2ème étape | $- -$ | $- -$ | $S_1$ | $32-45$ |
| 3ème étape | $- -$ | $- -$ | $B_1$ | $2-20$ |
| 4ème étape | $I_2$ | $0,90-3,50$ | $- -$ | $- -$ |
| 5ème étape | $- -$ | $- -$ | $S_2$ | $17-35$ |
| 6ème étape | $- -$ | $- -$ | Mélange $B_2+S_3$ | $3-30/1-15$ |
| avec | | | | |
| (mmoles) = Millimoles d'initiateur, par rapport à 100 g de la quantité totale des monomères styrène et diène, | | | | |
| (g) = Grammes des sortes de monomères, par rapport à 100 g de la quantité totale de styrène et de diène. | | | | |

**4.** Procédé selon la revendication 3, caractérisé en ce qu'on prépare des copolymères séquencés étoilés qui contiennent de 60 à 85% en poids de styrène et de 40 à 15% en poids de diène conjugué, les monomères étant polymérisés dans les quantités indiquées ci-après avec les quantités d'initiateur spécifiées:

| | Initiateur | Quantité (mmoles) | Sorte de monomère | Quantité (g) |
|---|---|---|---|---|
| 1ère étape | $I_1$ | $0,35-0,57$ | $- -$ | $- -$ |
| 2ème étape | $- -$ | $- -$ | $S_1$ | $35-40$ |
| 3ème étape | $- -$ | $- -$ | $B_1$ | $3-15$ |
| 4ème étape | $I_2$ | $1,35-2,85$ | $- -$ | $- -$ |
| 5ème étape | $- -$ | $- -$ | $S_2$ | $23-33$ |
| 6ème étape | $- -$ | $- -$ | Mélange $B_2+S_3$ | $12-25/2-12$ |

**5.** Procédé de préparation discontinue de copolymères séquencés ramifiés en étoile, de structure asymétrique, qui contiennent en liaison polymère, par rapport au copolymère séquencé ramifié, de 50 à 95% en poids de styrène et de 50 à 5% en poids d'un diène conjugué à $4-5$ atomes de carbone, par

a) polymérisation anionique successive de quantités éventuellement différentes de styrène et de diène, en présence d'un solvant et avec utilisation d'un composé organique du lithium servant d'initiateur, dont une petite partie est ajoutée au début de la polymérisation successive et une grande partie est ensuite ajoutée, les quantités de monomères ajoutées successivement étant chaque fois polymérisées complètement, et

b) copulation du mélange d'anions vivants de copolymère séquencé ayant une distribution bimodale des masses molaires, mélange qui est formé par polymérisation anionique successive, avec des agents de copulation polyfonctionnels en soi connus, dans des conditions en soi connues, suivie éventuellement de traitement par des donneurs de protons, élimination du solvant et récupération du produit de valeur,

caractérisé en ce que le réacteur de polymérisation, contenant le solvant anhydre (titré) en tant que charge préalable, est chargé des quantités d'initiateur $I_n$ et des monomères styrène et diène dans les quantités $S_n$ et $B_n$, et ces derniers sont polymérisés dans l'ordre indiqué ci-après:

| | Initiateur | Quantité (mmoles) | Sorte de monomère | Quantité (g) |
|---|---|---|---|---|
| 1ère étape | $I_1$ | 0,25 – 0,65 | – – | – – |
| 2ème étape | – – | – – | $S_1$ | 20 – 37 |
| 3ème étape | – – | – – | Mélange $B_1$ + $S_2$ | 2 – 20/1 – 3 |
| 4ème étape | $I_2$ | 0,90 – 3,50 | – – | – – |
| 5ème étape | – – | – – | $S_3$ | 19 – 30 |
| 6ème étape | – – | – – | Mélange $B_2$ + $S_4$ | 3 – 30/10 – 25 |
| avec | | | | |
| (mmoles) = Millimoles d'initiateur, par rapport à 100 g de la quantité totale des monomères styrène et diène, | | | | |
| (g) = Grammes des sortes de monomères, par rapport à 100 g de la quantité totale de styrène et de diène. | | | | |

6. Procédé selon la revendication 5, caractérisé en ce qu'on prépare des copolymères séquencés étoilés qui contiennent de 60 à 85% en poids de styrène et de 40 à 15% en poids de diéne conjugue, les monomères étant polymérisés dans les quantités indiquées ci-après avec les quantités d'initiateur spécifiées:

| | Initiateur | Quantité (mmoles) | Sorte de monomère | Quantité (g) |
|---|---|---|---|---|
| 1ère étape | $I_1$ | 0,35 – 0,57 | – – | – – |
| 2ème étape | – – | – – | $S_1$ | 22 – 32 |
| 3ème étape | – – | – – | Mélange $B_1$ + $S_2$ | 5 – 15/1 – 3 |
| 4ème étape | $I_2$ | 1,35 – 2,85 | – – | – – |
| 5ème étape | – – | – – | $S_3$ | 21 – 27 |
| 6ème étape | – – | – – | Mélange $B_2$ + $S_4$ | 10 – 25/16 – 23 |

7. Copolymères séquencés ramifiés en étoile, obtenus iselon l'une quelconque des revendications 1 à 6.

8. Utilisation des copolymères séquencés selon la revendication 7 pour la fabrication de pièces moulées.

9. Pièces moulées en copolymères séquencés selon la revendication 7.